**Europäisches Patentamt**

**European Patent Office**

**Office européen des brevets**

(19)

(11) Veröffentlichungsnummer: **0 170 080**
**A1**

(12) # EUROPÄISCHE PATENTANMELDUNG

(21) Anmeldenummer: 85108179.4

(22) Anmeldetag: 02.07.85

(51) Int. Cl.⁴: **B 65 G 69/04**
**B 65 G 65/32, B 65 D 88/54**

(30) Priorität: 28.07.84 DE 3427928

(43) Veröffentlichungstag der Anmeldung:
05.02.86 Patentblatt 86/6

(84) Benannte Vertragsstaaten:
AT BE CH DE FR GB IT LI LU NL SE

(71) Anmelder: Mathis System-Technik GmbH
Basler Kopf 1
D-7844 Neuenburg(DE)

(72) Erfinder: Mathis, Paul
Rimsinger Strasse 1
D-7801 Merdingen(DE)

(74) Vertreter: Schmitt, Hans, Dipl.-Ing. et al,
Patentanwälte Dipl.-Ing H. Schmitt Dipl.-Ing. W. Maucher
Dreikönigstrasse 13
D-7800 Freiburg(DE)

(54) Vorrichtung zum Verteilen von Schüttgut in einem Behälter.

(57) Zum Verteilen von Schüttgut (1) in einem Behälter (2) beim Einfüllen dient eine Vorrichtung (4), der eine Zuführleitung (5) zugehört. Die Zuführleitung (5) verläuft mindestens bereichsweise im Inneren des Behälters (2) von unten nach oben, wobei das aus verschiedenen Komponenten unterschiedlicher Korngröße und/oder unterschiedlichen spezifischen Gewichts gemischte Schüttgut (1) durch diese Zuführleitung (5) eingeblasen wird und der Behälter (2) eine Austrittsleitung (6) für die Einblasluft hat. Die Mündung (7) der Zuführleitung (5) befindet sich mit Abstand unter der Decke (8) des Behälters (2) und mittig zu dieser Mündung (7) ist an der Decke (8) des Behälters wenigstens eine im wesentlichen nach allen Seiten ihres Umfanges wirkende Umlenkvorrichtung (9) für das Schüttgut (1) vorgesehen, die das Schüttgut führt und umlenkt, um Entmischungen in diesem Bereich weitestgehend vorzubeugen. Dabei kann sich der Mündungsbereich (10) der Zuführleitung (5) konisch oder trichterförmig erweitern, so daß in diesem Bereich vor und an der Mündung (7) die Strömungsgeschwindigkeit gezielt verlangsamt wird, um ein Aufprallen mit entsprechender Entmischungsgefahr zu vermindern.

EP 0 170 080 A1

./...

Fig. 1

Firma

Mathis System-Technik GmbH

Basler Kopf 1

7844 Neuenburg

UNSERE AKTE · BITTE STETS ANGEBEN!

E 85 305 MR

## Vorrichtung zum Verteilen von Schüttgut in einem Behälter

Die Erfindung betrifft eine Vorrichtung zum Verteilen von Schüttgut in einem Behälter beim Einfüllen, vorzugsweise in einem Lagersilo, mit einer Zuführleitung, die mindestens bereichsweise im Inneren des Silos verläuft, wobei das aus verschiedenen Komponenten unterschiedlicher Korngröße und/oder unterschiedlichen Gewichts gemischte Schüttgut durch die Zuführleitung eingeblasen wird und der Behälter eine Austrittsöffnung für die Einblasluft hat.

Es ist bekannt, auf Baustellen Trockenmörtelmischungen in Baustellensilos einzublasen. Solche Trockenmörtelmischungen weisen sowohl bezüglich der Korngröße als auch der spezifischen Gewichte der Mischungsbestandteile erheblich voneinander abweichende Werte auf. Auch die Mengen der einzelnen Mischungsbestandteile unterscheiden sich erheblich. Entsprechend große Entmischungsprobleme treten auf, wenn eine solche trockene Mischung in einen Behälter oder Silo eingeblasen wird, weil die leichteren pulverförmigen Bestandteile dazu neigen, beim Herabfallen im Behälter aufgewirbelt zu werden, während die schwereren oder größeren Bestandteile liegen bleiben.

Ein weiteres Problem besteht darin, daß innerhalb eines Behälters, der häufig einen trichterförmigen Auslaß hat, eine ungleichmäßige Materialanhäufung entsteht, die beim Entleeren des Behälters zu Brückenbildungen und wiederum zu Entmischungen führen kann.

Zwar sind schon Vorrichtungen zum Verteilen von Schüttgut beim Eintritt in Silobehälter bekannt, die für eine möglichst gleichmäßige Verteilung sorgen sollen, wobei jedoch die Einfüllung jeweils von oben geschieht. So ist aus der DE-AS 27 03 329 eine Vorrichtung bekannt, bei welcher mehrere Drehteller untereinander angeordnet sind, um ein Schüttgut in einem Behälter zu verteilen. Eine derartig aufwendige maschinelle Apparatur an der Oberseite eines Behälters ist jedoch vor allem bei Baustellensilos nicht denkbar.

Es besteht deshalb die Aufgabe, eine Vorrichtung der eingangs erwähnten Art zu schaffen, mit der gemischte Schüttgüter von unten her in einen Lagerbehälter eingeblasen und dabei möglichst gleichmäßig in diesem verteilt werden können, wobei gleichzeitig die Entmischungsgefahr so gering wie möglich gehalten werden soll. Vor allem soll das Aufprallen des einzufüllenden Materiales im Inneren des Behälters so schwach wie möglich sein, um Entmischungen vorzubeugen, damit das gemischte Schüttgut nach dem Einbringen in den Behälter, z. B. einen Baustellensilo, homogen bleibt und gelagert werden kann.

Die Lösung dieser Aufgabe besteht im wesentlichen darin, daß die Zuführleitung wenigstens im Bereich ihrer Mündung von unten nach oben mit Abstand gegen die Decke des Behälters gerichtet ist und daß an der Decke des Behälters mittig zu der Mündung wenigstens eine im wesentlichen nach allen Seiten ihres Umfanges wirkende Umlenkvorrich-

3   0170080

tung für das Schüttgut vorgesehen ist. Somit kann dieses Schüttgut von unten her eingeblasen werden, so daß auf der Oberseite des Behälters keine aufwendigen Füllvorrichtungen mit maschinellem Antrieb od. dgl. benötigt werden. Das Schüttgut wird vielmehr entgegen der Schwerkraft eingeblasen, wodurch eine gezielte Eintrittsgeschwindigkeit möglich ist, die auf die Umlenkvorrichtung abgestimmt sein kann. Durch die Umlenkvorrichtung wiederum wird das Schüttgut aus seiner zunächst nach oben gerichteten Bewegung seitwärts und nach unten umgelenkt, so daß es sich gleichmäßig in dem Behälter verteilen kann. Dabei können Aufpralleffekte so klein wie möglich gehalten werden, so daß sich ein sanftes und weitestgehend entmischungsfreies Füllen des Behälters mit praktisch gleichmäßigem Anstieg des Füllungsniveaus erreichen läßt.

Besonders zweckmäßig ist es dabei für eine gleichmäßige und möglichst entmischungsfreie Füllung des Behälters, wenn sich der Mündungsbereich der Zuführleitung konisch oder trichterförmig zur Verlangsamung der Strömungsgeschwindigkeit im und hinter dem Mündungsbereich erweitert. Diese Erweiterung des Mündungsbereiches bewirkt eine entsprechend der Länge dieser Erweiterungsstrecke gezielte Verlangsamung der Fließgeschwindigkeit des aus Schüttgut und Druckluft bestehenden Stromes, so daß gerade im Bereich des Austrittes aus der Einblasleitung, wo die Gefahr von Entmischungen und die Gefahr einer Staubbildung aus pulverförmigen Komponenten besonders groß ist, durch Verminderung der Fließgeschwindigkeit dieser Gefahr entgegengewirkt wird. Entsprechend sanft ist der Aufprall auf die Umlenkvorrichtung, so daß eine weitgehend gleichmäßige Materialführung auch nach Verlassen der Einblasleitung an dieser Umlenkvorrichtung möglich ist.

Der Mündung der Zuführleitung gegenüber kann ein kegelförmiger Leitkörper angeordnet sein, dessen Spitze gegen die Mündung der Zuführleitung gerichtet ist und dessen Basis sich an oder nahe der Decke des Behälters befindet und vorzugsweise einen gerundeten Übergang hat. Dies ist besonders zweckmäßig für das Befüllen von im Querschnitt runden Behältern, in denen der Kegel mit seiner Basis für eine möglichst gleichmäßige Materialverteilung nach dem Austritt aus der Einblasleitung sorgt. Dabei ist es auch möglich, daß der Übergang von dem Leitkörper zu der Decke sich weiter fortsetzt und einen von der Decke weg nach außen gegen die Seitenwandungen des Behälters hinweisenden Rand hat. Somit kann der Materialstrom bis zur vollständigen Umlenkung geführt werden.

Eine Ausgestaltung der Erfindung von ganz besonderer Bedeutung, die zur Vergleichmäßigung der Füllung des Behälters wesentlich beiträgt und Entmischungen noch besser vorbeugt, kann darin bestehen, daß gegenüber der Mündung der von unten nach oben vorzugsweise vertikal verlaufenden Zuführleitung wenigstens zwei, vorzugsweise drei konzentrisch zueinander und wenigstens teilweise ineinander angeordnete Umlenkvorrichtungen mit je einer Eintrittsfläche und demgemäß je einer Austrittsfläche vorgesehen sind, wobei die innere Eintrittsfläche zu der äußeren Austrittsfläche führt und wobei die Größen der Eintrittsflächen vorzugsweise etwa proportional zu den Flächen sind, auf die der entsprechende Materialanteil fällt. Das aus der Einblasleitung austretende Schüttgut wird also sofort von mehreren Eintrittsflächen aufgenommen, so daß mehrere konzentrische Schüttgut-Ringe entstehen, deren jeder nur einen Bruchteil der gesamten austretenden Schüttgutmenge umfaßt. Da davon ausgegangen werden kann, daß das Schüttgut beim Austritt aus der Zuführleitung im wesentlichen seine gewünschte Mischung aufweist, wird durch die getrennte Führung mehrerer kleinerer Schüttgutmengen einer größeren Entmischung wirkungsvoll entgegengewirkt. Jede einzelne Schüttgutmenge wird während ihrer
Führung und Umlenkung eine geringere Entmischungstendenz
haben, als es bei einer größeren Schüttgutmenge in einem
entsprechend größeren Raum bei ungeführtem freien Flug
möglich wäre. Gleichzeitig ist durch die Proportionalität
der Eintrittsflächen zu den Flächen, die mit der jeweiligen Schüttgut-Teilmenge befüllt werden sollen, für einen
gleichmäßigen Anstieg des gesamten Niveaus des Schüttgutes im Behälter gesorgt.

Zwischen den Eintrittsflächen und den Austrittsflächen
der ineinander angeordneten Umlenkvorrichtungen können
verschieden starke Umlenkungen vorgesehen sein, wobei
die Umlenkung von der innersten Eintrittsfläche zu der
äußersten Eintrittsfläche den größten und die Umlenkung
von der äußersten Eintrittsfläche zu der innersten Austrittsfläche den spitzesten Winkel bildet. Dadurch ist
es möglich, mehrere Umlenkvorrichtungen konzentrisch ineinander unterzubringen und dennoch jeden Teil-Materialstrom von dem anderen getrennt zu halten, bis diese aus
der gesamten Umlenkvorrichtung wieder austreten. Durch
die Winkel der Umlenkungen werden dabei die Material-
Teilströme so geführt, daß sie praktisch nebeneinander,
jedoch ohne Zwischenraum in dem Behälter herabfallen
können.

Um einen möglichst guten Übergang von der Einblasleitung
in die Umlenkvorrichtung zu erzielen, ist es vorteilhaft,
wenn die Mündung der Zuführleitung und die Eintrittsflächen der Umlenkvorrichtungen in einer gemeinsamen
Ebene liegen. Es ergibt sich dann praktisch kein Zwischenraum zwischen dem Austritt aus der Einblasleitung
und dem Eintritt in die Umlenkvorrichtung. Auch bei der Verwendung mehrerer ineinander angeordneter Umlenkvorrichtungen ist es zweckmäßig, wenn von der Decke des Behälters und der äußeren Umlenkvorrichtung ein Kegelkörper zu der inneren Eintrittsfläche ragt, dessen Spitze vorzugsweise in der Ebene der inneren Eintrittsfläche angeordnet ist. Vor allem bei Kombination mit der Maßnahme, die Mündung der Einblasleitung ebenfalls in diese Ebene zu verlegen, wobei die Mündung der Einblasleitung deren größten Querschnitt an ihrer Erweiterung aufweisen kann, ergibt sich praktisch an der Stelle der geringsten Strömungsgeschwindigkeit auch gleich gezielt die Aufteilung und Umlenkung des Materialstromes. Vor allem für runde Silobehälter ist es vorteilhaft, wenn die Eintrittsflächen und die Austrittsflächen jeweils Ringflächen sind. Dabei können die Mündung der Zuführleitung und die Umlenkvorrichtung zentral bzw. mittig in einem derartigen runden Silo angeordnet sein. Dadurch ergibt sich eine gute Verteilung mit wenig Aufprall des Schüttgutes gegen die Seitenwände des Silos.

Eine abgewandelte Ausführungsform der Vorrichtung sowohl für runde als aber auch für Silos anderer Querschnitte kann darin bestehen, daß die Austrittsflächen der Umlenkvorrichtungen durch radiale Wandungen in Kreissegmente unterteilt sind, deren einzelne Austrittsöffnungen jeweils in Umfangsrichtung abwechselnd auf unterschiedlichen Außendurchmessern verteilt sind. Es ergeben sich dann noch mehr einzelne Schüttgutströme mit entsprechend stärkerer Aufteilung an den Austritten, wobei dort einander benachbarte Schüttgutströme auf unterschiedliche Durchmesserbereiche verteilt werden. Entsprechend gleichmäßig kann je nach Anordnung der Wandungen die Verteilung des Schüttgutes gemacht werden. Durch die noch stärkere Aufteilung des Schüttgutstromes während seiner Führung und Umlenkung ergeben sich noch kleinere Teilmengen, die in sich zu entsprechend wenig Entmischung führen.

Die Kreissegmente können mit unterschiedlichen Segmentwinkeln gebildet sein und die Kreissegmente für den
größten Austrittsumfang können jeweils den größten Segmentwinkel haben. Dadurch wird erreicht, daß an dem größten Umfang der Umlenkvorrichtung auch der relativ größte
Schüttgutstrom ankommt, um die erwünschte gleichmäßige
Verteilung und das gewünschte gleichmäßige Niveau innerhalb des gefüllten Behälters zu erzielen.

Vor allem bei konzentrisch angeordneten Umlenkvorrichtungen mit konzentrischen Eintritts- und Austrittsringflächen kann es zweckmäßig sein, wenn zumindest die innere oder die inneren Austrittsflächen tiefer als die
Eintrittsflächen und/oder die Mündung der Zuführleitung
liegt. Bei einer Ausführungsform mit mehreren Austrittssegmenten kann es jedoch zweckmäßig sein, wenn die Mündung der Zuführleitung auf einer oberen Eintrittsebene
in die einzelnen Austrittssegmente liegt und oberhalb
dieser Mündung und oberhalb der Eintritte in die Austrittssegmente eine vorzugsweise gewölbte Prall- und
Verteilfläche vorgesehen ist, die im Bereich der Mündung
der Zuführleitung die größte Höhe hat und im Randbereich
der Austrittsvorrichtung mit dieser verbunden ist. In
diesem Falle liegen also alle Austrittsflächen tiefer als
die Mündung der Zuführleitung. Das Material tritt aus der
Zuführleitung aus, kann durch deren Erweiterung in seiner
Fließgeschwindigkeit gleichzeitig verlangsamt sein, so
daß es an der über der Mündung gewölbten Verteilfläche
sanft umgelenkt wird, so daß es problemlos in die verschiedenen Austrittssegmente fällt und von diesen in die
gewünschten Bereiche des Behälters geführt und geleitet
wird.

8 0170080

Um die gewünschten Verteilungen der einzelnen Materialströme zu erreichen, können innerhalb der einzelnen auf
unterschiedlichen Durchmessern mündenden Segmente von
innen nach außen schräg von oben nach unten verlaufende
Leitvorrichtungen für den größeren Abstand des Austrittes
von der Achse der Vorrichtung und schräg von außen nach
innen und unten verlaufende Leitfläche für den Austritt
näher zu der Mitte der Vorrichtung jeweils zwischen den
radialen Wandungen vorgesehen sein.

Vor allem bei Kombination einzelner oder mehrerer der
vorbeschriebenen Merkmale und Maßnahmen und Anpassung
der verschiedenen Abmessungen, insbesondere des Winkels
der Erweiterung der Leitungsmündung oder auch der Umlenkwinkel an den verschiedenen Umlenkvorrichtungen sowie
auch der Höhe der gesamten Umlenkvorrichtung ist eine
individuelle Anpassung an die jeweils einzufüllenden
Schüttgutmischung und deren Fließverhalten möglich, so
daß je nach Schüttgutmenge immer eine weitestgehend
gleichmäßige und niveaugleiche Verteilung innerhalb eines
Behälters möglich ist, wobei einer Entmischungsgefahr
durch die Aufteilung des Materialstromes unmittelbar
hinter der Einblasleitung in einzelne Teilströme und
deren Führung weitestgehend ausgeschlossen ist und auch
die Pralleffekte so vermindert sind, daß eine Staub- und
Wirbelbildung durch leichtere pulverförmige Mischungsbestandteile weitestgehend vermieden wird. Darüber hinaus
ergibt sich eine gute Luftführung, die eine entsprechend
gute Luftableitung erlaubt, was wiederum dazu beiträgt,
eine Staubbildung mit entsprechender Entmischung zu verhindern oder zu vermindern.

Nachstehend ist die Erfindung mit ihren ihr als wesentlich zugehörenden Einzelheiten anhand der Zeichnung in
verschiedenen Ausführungsbeispielen noch näher beschrieben. Es zeigt in zum Teil schematischer Darstellung:

Fig. 1   einen Längsschnitt durch einen Füße aufweisenden Silobehälter mit einer Vorrichtung zum Verteilen von Schüttgut in seinem Inneren,

in vergrößertem Maßstab

Fig. 2   eine Ausführungsform der erfindungsgemäßen Vorrichtung mit einem kegelförmigen, an seiner Basis gerundeten Leitkörper,

Fig. 3   einen Querschnitt durch eine Vorrichtung zum Verteilen des Schüttgutes mit mehreren konzentrisch zueinander angeordneten Umlenkungen an der Mündung einer trichterförmig erweiterten Zuführleitung,

Fig. 4   die Anordnung gemäß Fig. 3 mit einer Andeutung, wie das Schüttgut am Austritt der Umlenkvorrichtungen verteilt wird und

Fig. 5   eine Draufsicht der einzelnen gedachten Ringflächen, auf welche die durch die Vorrichtung nach Fig. 3 und 4 verteilten Schüttgutströme jeweils auftreffen,

Fig. 6   einen Längsschnitt durch eine abgewandelte Umlenkvorrichtung mit einzelnen Führungssegmenten für Materialströme,

Fig. 7   eine Ansicht der einzelnen Führungssegmente der Umlenkvorrichtung nach Fig. 6,

Fig. 8   verschiedene Materialströme, die von den verschiedenen Führungssegmenten gemäß Fig. 6 und 7 in unterschiedliche Umfangsbereiche eines Behälters gelenkt werden, sowie

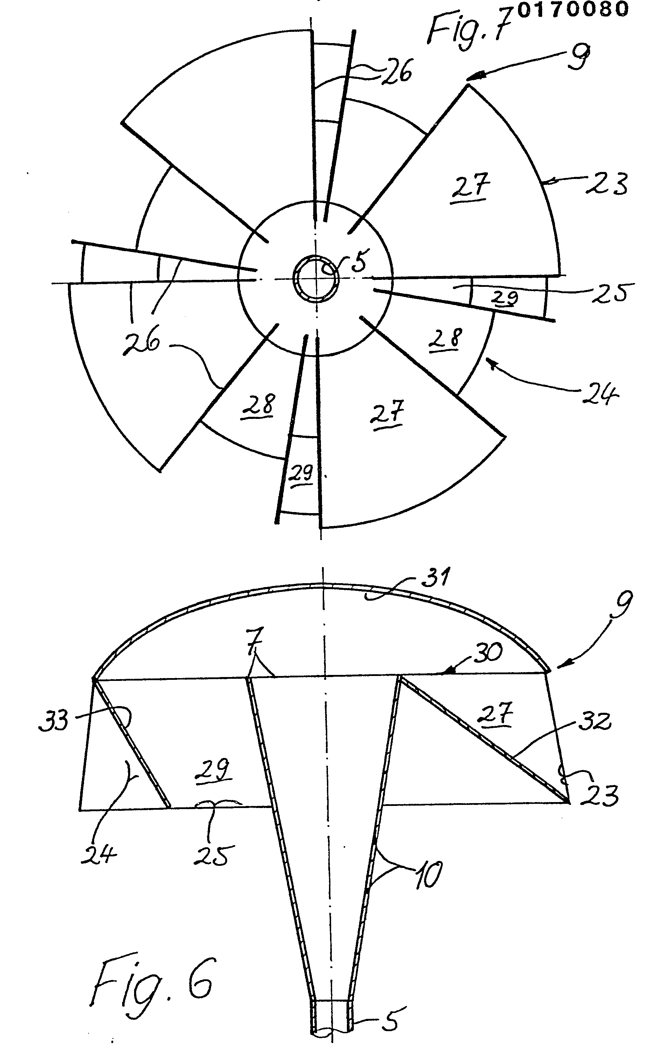

Fig. 9    eine Draufsicht der Ringbereiche, auf welche die
unterschiedlichen, von den Segmenten gemäß den
Figuren 6 bis 8 verteilten Materialströme jeweils auftreffen.

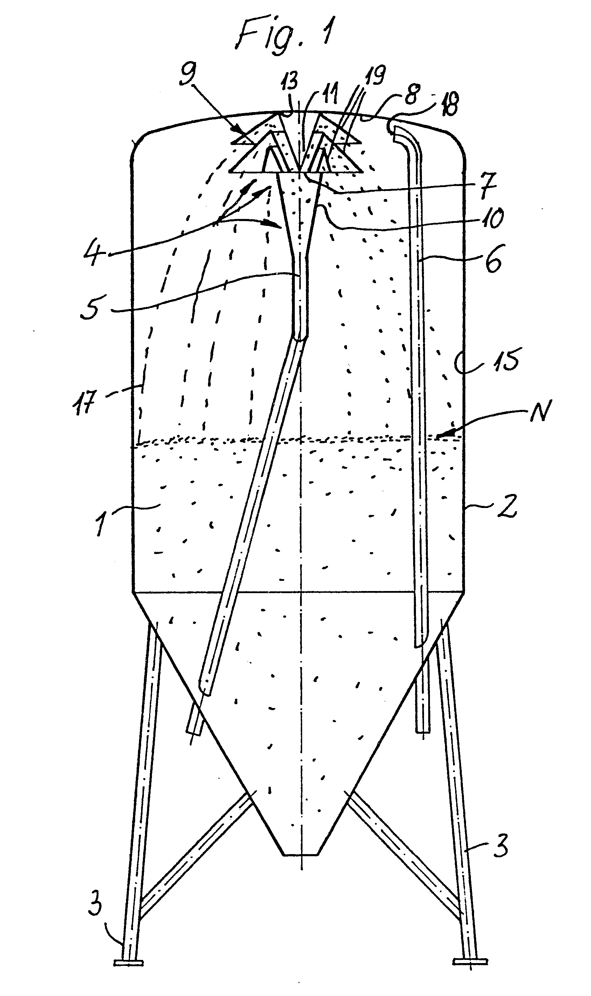

Zum Verteilen von Schüttgut 1 in einem Behälter 2, im
Ausführungsbeispiel einem Silo mit Füßen 3, dient eine im
ganzen mit 4 bezeichnete Vorrichtung, zu der eine Zuführleitung 5 gehört, die mindestens bereichsweise im Inneren
des Behälters 2 verläuft, wobei das aus verschiedenen
Komponenten unterschiedlicher Korngröße und/oder unterschiedlichen spezifischen Gewichtes gemischte Schüttgut 1
durch diese Zuführleitung 5 eingeblasen wird und der Behälter eine Austrittsöffnung bzw. Austrittsleitung 6 für
die Einblasluft hat. Diese Anordnung erkennt man in Fig.1.

Ferner ist in Fig. 1 angedeutet, daß die Zuführleitung 5
wenigstens im Bereich ihrer Mündung 7 von unten nach oben
mit Abstand gegen die Decke 8 des Behälters 2 gerichtet
ist und daß an der Decke 8 des Behälters 2 mittig zu der
Mündung 7 eine im wesentlichen nach allen Seiten ihres
Umfanges wirkende Umlenkvorrichtung 9 für das Schüttgut
vorgesehen ist, die gemäß der vorstehenden Figurenaufzählung und der nachstehenden Beschreibung unterschiedlich gestaltet sein kann und dazu dient, das von unten
nach oben eingeblasene Schüttgut möglichst schonend umzulenken und im Behälter 2 zu verteilen.

Bei allen Ausführungsbeispielen erkennt man, daß sich
der Mündungsbereich 10, d. h. der unmittelbar vor der
Mündung 7 befindliche Bereich der Zuführleitung 5 konisch oder trichterförmig zur Verlangsamung der Strömungsgeschwindigkeit des Schüttgutes im und hinter dem Mündungsbereich erweitert. Dies trägt erheblich dazu bei, einer Entmischungsgefahr vorzubeugen, weil der Materialstrom dadurch verlangsamt und somit Aufprallkräfte vermindert werden. Entsprechend schonend kann das Schüttgut 1 umgelenkt werden, so daß es auch entsprechend sanft im Inneren des Behälters 2 herabfällt und diesen mit möglichst gleichmäßigem Niveau N allmählich auffüllt.

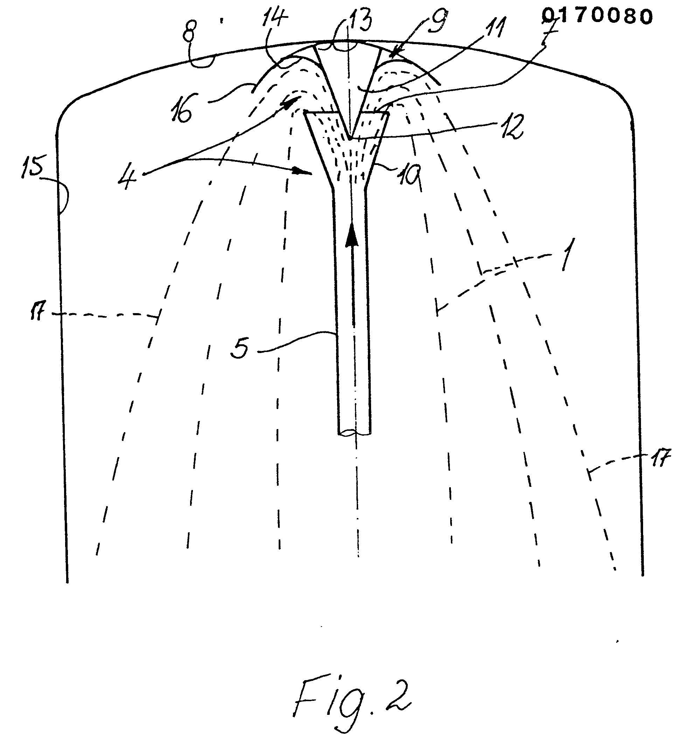

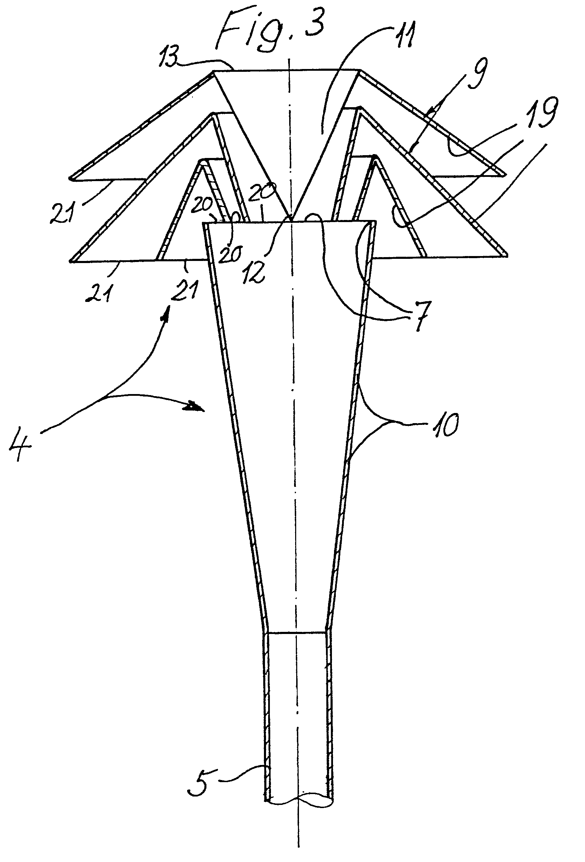

Bei den beiden Ausführungsbeispielen nach Fig. 2 und 3 erkennt man, daß der Mündung 7 der Zuführleitung 5 gegenüber ein kegelförmiger Leitkörper 11 angeordnet ist, dessen Spitze 12 gegen die Mündung 7 der Zuführleitung 5 gerichtet ist und dessen Basis 13 sich an oder nahe der Decke 8 des Behälters 2 befindet. Beim Ausführungsbeispiel nach Fig. 2 hat dabei die Basis 13 dieses Leitkörpers 11 einen gerundeten Übergang 14, der gemäß Fig. 2 für eine entsprechend gezielte und sanfte Umlenkung des Materialstromes sorgt. Dabei setzt sich in diesem Ausführungsbeispiel nach Fig. 2 der Übergang 14 von dem Leitkörper 11 zu der Decke 8 weiter fort und hat einen von der Decke 8 weg nach außen gegen die Seitenwandungen 15 des Behälters 2 hinweisenden Rand 16. Da solche Behälter 2 nie ganz bis zu ihrer Decke gefüllt werden, kann so auch durch Regulierung der durch den Pfeil Pf 1 angedeuteten Fließgeschwindigkeit dafür gesorgt werden, daß auch der äußerste Bereich 17 des herabfallenden Materialstromes nicht gegen die Wandung 15 prallt, sondern so wie in Fig. 1 angedeutet auf das jeweils vorhandene Materialniveau N fällt. Es ergibt sich dadurch auch ein Bereich, in welchem kein Material oder Schüttgut 1 anfällt, so daß dort gemäß Fig. 1 der Eintritt 18 in die Entlüftungsleitung 6 angeordnet werden kann. Praktisch sorgt der Rand 16 bzw. eine im folgenden noch näher zu erläuternde Ausbildung der Umlenkvorrichtung 9 dafür, daß die durch die Leitung 6 nach außen geführte Einblasluft kein Schüttgut oder keine Schüttgutkomponenten mitreißen kann, wodurch die Mischung verfälscht würde.

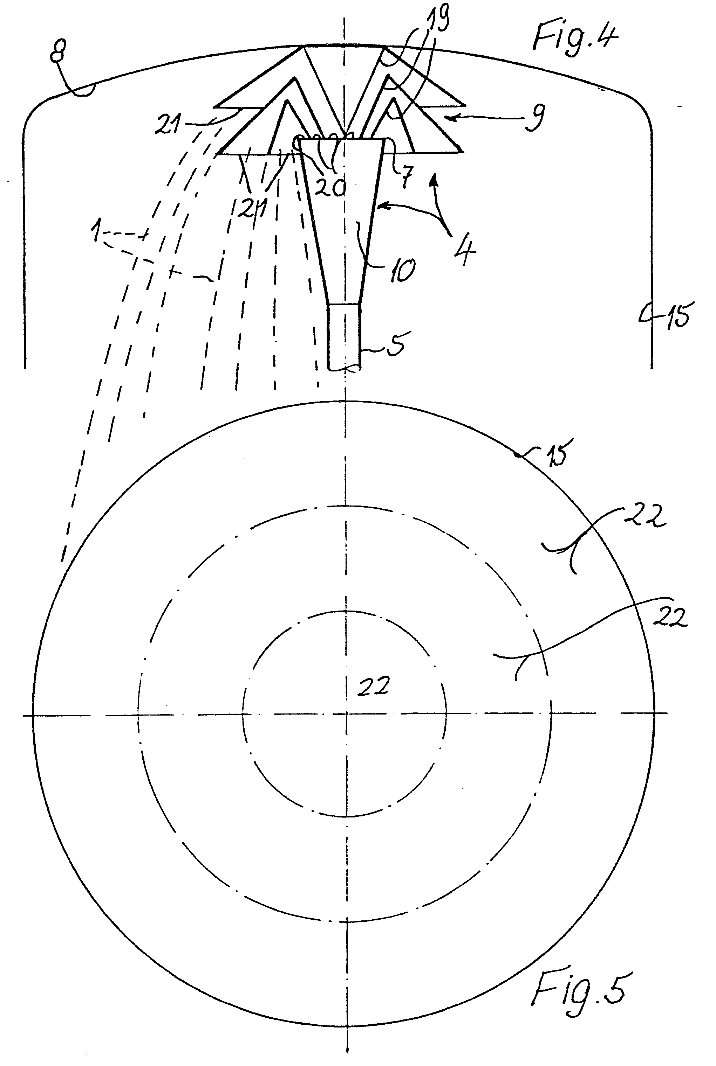

In den Figuren 1, 3 und 4 ist eine Ausgestaltung der Erfindung von eigener schutzwürdiger Bedeutung dargestellt. In diesem Falle sind gegenüber der Mündung 7 der von unten nach oben vertikal verlaufenden Zuführleitung 5 drei konzentrisch zueinander und teilweise ineinander angeordnete Umlenkungen 19 als Umlenkvorrichtung 9 vorgesehen. Jede Umlenkung 19 hat eine Eintrittsfläche 20 und demgemäß eine Austrittsfläche 21, wobei die innere Eintrittsfläche 20 der am weitesten oben befindlichen Umlenkung 19 zu der äußersten Austrittsfläche 21 führt und wobei die Größe der Eintrittsflächen 20 proportional zu den Flächen 22 in Fig. 5 sind, auf die der entsprechende Materialanteil fällt. Diese Ausführungsform der Erfindung teilt also den von der trichterförmigen Erweiterung 10 der Zuführleitung 5 kommenden und dadurch verlangsamten Materialstrom gezielt in mehrere Einzelströme auf, so daß innerhalb dieser Ströme eine Entmischungsgefahr schon dadurch verringert ist. Hinzu kommt, daß das Material während seiner Umlenkung jeweils zusammengehalten und geführt wird, weil die Umlenkungen 19 schon im Bereich der Eintrittsflächen 20, aber auch bis zu den Austrittsflächen 21 jeweils konzentrische ringförmige Querschnitte haben, aus denen das Material oder Schüttgut während seiner Umlenkung nicht entweichen kann. Gerade in der kritischen Phase der Umlenkung, die bisher durch einen einfachen Aufprall auch die Decke 8 eines Behälters 2 bewirkt wurde, ist also einer Entmischungsgefahr weitestgehend vorgebeugt. Die beschriebene Aufteilung in mehrere Materialströme und die spezielle Anordnung der Austrittsflächen mit der Führung durch die Umlenkungen 19 ergibt dabei gleichzeitig die erwünschte gleichmäßige Verteilung des Materiales auf die Flächen 22 innerhalb des Behälters 2.

Vor allem in Fig. 3 erkennt man, daß zwischen den Eintrittsflächen 20 und den Austrittsflächen 21 verschieden starke Umlenkwinkel vorgesehen sind, wobei die Umlenkung 19 von der innersten Eintrittsfläche 20 zu der äußersten Austrittsfläche 21 den größten und die Umlenkung 19 von der äußersten Eintrittsfläche 20 zu der innersten Austrittsfläche 21 den spitzesten Winkel bildet. Dadurch wird sichergestellt, daß jeder aufgeteilte Materialstrom unabhängig von dem anderen geführt werden kann, wobei jeweils die Außenseite einer inneren Umlenkung die innere Begrenzung der nächst äußeren Umlenkung bildet, wozwischen das Material geführt ist. Durch die unterschiedlichen Umlenkwinkel ergibt sich dabei gemäß Fig. 3 in vorteilhafter Weise eine Erweiterung gegen die Austrittsflächen 21 hin, die die Austrittsgeschwindigkeit der einzelnen Materialströme weiter verringert, so daß diese entsprechend sanft in den Behälter 2 hinabfallen.

In diesem Ausführungsbeispiel liegen die Mündung 7 der Zuführleitung 5 und die Eintrittsflächen 20 der Umlenkvorrichtung 9 in einer gemeinsamen Ebene, so daß das einfließende Material zwangsläufig in den einzelnen Umlenkungen 19 in den Mengen geführt wird, die den Eintrittsöffnungen proportional sind. Fig. 3 verdeutlicht dabei, daß zumindest die inneren Austrittsflächen 21 tiefer als die Eintrittsflächen 20 und die Mündung 7 der Zuführleitung 5 liegen können, damit es zwischen der Mündung 7 und der Umlenkvorrichtung 9 keinen Zwischenraum gibt, in welchem eventuell ein Rückstau und somit ein Ausweichen des zugeführten Schüttgutes 1 auftreten könnte. Dabei ragt in diesem Ausführungsbeispiel der kegelförmige Leitkörper 11 von der Decke 8 des Behälters 2 und der äußeren Umlenkung 19 zu der inneren Eintrittsfläche 20 und seine Spitze 12 ist ebenfalls in der Ebene der inneren Eintrittsfläche 20 und somit auch in der Ebene der Mündung 7 angeordnet. Für runde Silobehälter 2 sind die Eintrittsflächen 20 und die Austrittsflächen 21 bei diesem Ausführungsbeispiel jeweils Ringflächen und die Mündung 7 der Zuführleitung 5, das letzte Stück dieser Zuführleitung 5 und die Umlenkvorrichtung 9 sind zentral bzw. mittig in dem runden Silo 2 angeordnet, was zu der gewünschten gleichmäßigen Verteilung des Schüttgutes 1 führt.

Ein abgewandeltes Ausführungsbeispiel zeigen die Figuren 6 bis 9. Dabei ist vor allem die Umlenkvorrichtung 9 abgewandelt.

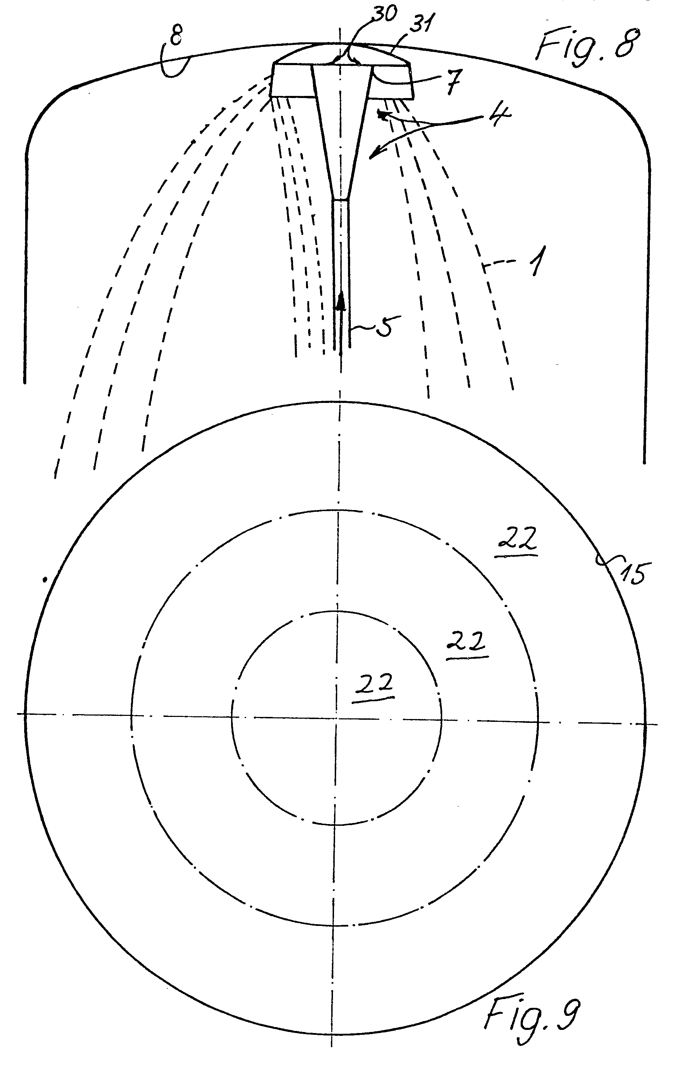

Gemäß den Figuren 6 und 7 ist dabei vorgesehen, daß die Umlenkvorrichtung 9 in ihrem Austrittsbereich durch radiale Wandungen 26 in Segmente 27, 28 und 29 unterteilt ist, deren einzelne Austrittsöffnungen 23, 24 und 25 jeweils in Umfangsrichtung abwechselnd auf unterschiedlichen Außendurchmessern verteilt sind. Man erkennt dies deutlich bei gemeinsamer Betrachtung der Fig. 7 mit Fig. 6. Dabei sieht man in Fig. 7 ferner, daß die Segmente 27, 28 und 29 mit unterschiedlichen Segmentwinkeln gebildet sind und die Segmente 27 für den größten Austrittsumfang jeweils den größten Segmentwinkel haben.

Gemäß Fig. 6 liegt die Mündung 7 der Zuführleitung 5 und ihrer trichterförmigen Erweiterung 10 auf einer oberen Eintrittsebene 30, in welcher das Schüttgut 1 in die einzelnen Segmente 27, 28 und 29 eingeführt werden kann und oberhalb dieser Mündung 7 und oberhalb der Eintritte 30 in die Austrittssegmente 27, 28 und 29 befindet sich eine gewölbte Prall- und Verteilfläche 31, die im Bereich der Mündung 7 der Zuführleitung 5 die größte Höhe hat und im Randbereich der Umlenkvorrichtung 9 mit deser verbunden ist.

Fig. 7 zeigt ferner, daß in vorteilhafter Weise drei verschiedene Segmente, die schon erwähnten Segmente 27, 28 und 29, sich mehrfach, im Ausführungsbeispiel vierfach, statt dessen aber auch nur dreifach oder z. B. sechsfach am Umfang abwechseln. Dies führt zu einer guten Führung und Verteilung des in entsprechend viele Teilströme aufgeteilten Schüttgutes, welches aufgrund dieser Unterteilung in einzelne Teilströme in diesem Umlenkungsbereich an einer Entmischung weitestgehend gehindert ist.

In Fig. 6 ist noch angedeutet, daß innerhalb der einzelnen auf unterschiedlichen Durchmessern mündenden Segmente von innen nach außen schräg von oben nach unten verlaufende Leitplatten 32 für den größeren Abstand des Austrittes 23 von der Achse der Vorrichtung und schräg von außen nach innen verlaufende Leitbleche 33 für den Austritt 25 näher zu der Mitte der Vorrichtung jeweils zwischen den radialen Wandungen 26 vorgesehen sind. Analog ist auch ein Leitblech für den Austritt 24 vorgesehen, das in der Zeichnung nicht sichtbar ist.

Insgesamt wird durch diese Umlenkvorrichtung 9 mit den verschiedenen Segmenten erreicht, daß verschiedene Materialströme entsprechende Richtungen erhalten, wie sie in Fig. 8 für die drei verschiedenen Segmente jeweils einmal angedeutet sind. Diese drei unterschiedlichen Materialströme unterhalb der Umlenkvorrichtung 9 kommen dabei in Wirklichkeit natürlich jeweils mehrfach entsprechend der Anzahl der einzelnen Segmente vor. Dadurch kann wiederum eine gleichmäßige Verteilung des Schüttgutes auf die Kreisringflächen 22 gemäß Fig. 9 erreicht werden.

In allen drei Ausführungsbeispielen ist es in vorteilhafter Weise möglich, durch eine im Inneren des Silos 2 nach oben geführte Zuführleitung 5 zur Entmischung neigende Schüttgüter einzublasen, im "Windschatten" einer Umlenkvorrichtung 9 die Einblasluft abzuführen und vor allem das Schüttgut so schonend im Bereich der Decke 8 des Behälters 2 umzulenken und dabei gegebenenfalls in mehrere Einzelströme aufzuteilen, daß an dieser Stelle eine Entmischung praktisch ausgeschlossen ist und außerdem das Material bestmöglich verteilt und möglichst sanft im Behälter 2 herabfällt, um so zu einer ständig weitestgehend niveaugleichen Auffüllung dieses Behälters zu sorgen.

Alle in der Beschreibung, den Ansprüchen, der Zusammenfassung und der Zeichnung dargestellten Merkmale und Konstruktionsdetails können sowohl einzeln als auch in beliebiger Kombination miteinander wesentliche Bedeutung haben.

Firma

Mathis System-Technik GmbH

Basler Kopf 1

7844 Neuenburg

UNSERE AKTE · BITTE STETS ANGEBEN:

E 85 305 MR

Vorrichtung zum Verteilen von Schüttgut in einem Behälter

Ansprüche

1. Vorrichtung (4) zum Verteilen von Schüttgut (1) in einem Behälter (2) beim Einfüllen, vorzugsweise in einem Lagersilo mit Füßen (3), mit einer Zuführleitung (5), die mindestens bereichsweise im Inneren des Behälters (2) verläuft, wobei das aus verschiedenen Komponenten unterschiedlicher Korngröße und/oder unterschiedlichen spezifischen Gewichts gemischte Schüttgut (1) durch die Zuführleitung (5) eingeblasen wird und der Behälter (2) eine Austrittsöffnung oder -leitung (6) für die Einblasluft hat, d a d u r c h g e k e n n z e i c h n e t , daß die Zuführleitung (5) wenigstens im Bereich ihrer Mündung (7) von unten nach oben mit Abstand gegen die Decke (8) des Behälters (2) gerichtet ist und daß an der Decke (8) des Behälters (2) mittig zu der Mündung (7) wenigstens eine im wesentlichen nach allen Seiten ihres Umfanges wirkende Umlenkvorrichtung (9) für das Schüttgut (1) vorgesehen ist.

2. Vorrichtung nach Anspruch 1, dadurch gekennzeichnet, daß sich der Mündungsbereich (10) der Zuführleitung (5) konisch oder trichterförmig zur Verlangsamung
der Strömungsgeschwindigkeit im und hinter dem Mündungsbereich erweitert.

3. Vorrichtung nach Anspruch 1 oder 2, dadurch gekennzeichnet, daß der Mündung (7) der Zuführleitung (5)
gegenüber ein kegelförmiger Leitkörper (11) angeordnet ist, dessen Spitze (12) gegen die Mündung (7)
der Zuführleitung (5) gerichtet ist und dessen Basis
(13) sich an oder nahe der Decke (8) des Behälters
(2) befindet und vorzugsweise einen gerundeten Übergang (14) hat.

4. Vorrichtung nach einem der Ansprüche 1 bis 3, dadurch gekennzeichnet, daß der Übergang (14) von dem
Leitkörper (11) zu der Decke (8) sich weiter fortsetzt und einen von der Decke (8) weg nach außen
gegen die Seitenwandungen des Behälters (2) hinweisenden Rand (16) hat.

5. Vorrichtung insbesondere nach einem der vorstehenden Ansprüche, dadurch gekennzeichnet, daß gegenüber der Mündung (7) der von unten nach oben vorzugsweise vertikal verlaufenden Zuführleitung (5)
wenigstens zwei, vorzugsweise drei konzentrisch zueinander und wenigstens teilweise ineinander angeordnete Umlenkungen (19) mit je einer Eintrittsfläche (20) und demgemäß je einer Austrittsfläche
(21) vorgesehen sind, wobei die innere Eintrittsfläche (20) zu der äußeren Austrittsfläche (21)
führt und wobei die Größen der Eintrittsflächen (20)
vorzugsweise proportional zu den Flächen (22) sind,
auf die der entsprechende Materialanteil föllt.

6. Vorrichtung nach einem der Ansprüche 1 bis 5, dadurch gekennzeichnet, daß zwischen den Eintrittsflächen und den Austrittsflächen verschieden starke Umlenkungswinkel vorgesehen sind, wobei die Umlenkung (19) von der innersten Eintrittsfläche (20) zu der äußersten Austrittsfläche (21) den größten und die Umlenkung (19) von der äußersten Eintrittsfläche (20) zu der innersten Austrittsfläche (21) den spitzesten Winkel bildet.

7. Vorrichtung nach einem der Ansprüche 1 bis 6, dadurch gekennzeichnet, daß die Mündung (7) der Zuführleitung (5) und die Eintrittsflächen (20) der Umlenkvorrichtung (9) in einer gemeinsamen Ebene liegen.

8. Vorrichtung nach einem der Ansprüche 1 bis 7, dadurch gekennzeichnet, daß der kegelförmige Leitkörper (11) von der Decke (8) des Behälters (2) und der äußeren Umlenkung (9) zu der inneren Eintrittsfläche (20) ragt und seine Spitze (12) vorzugsweise in der Ebene der inneren Eintrittsfläche (20) angeordnet ist.

9. Vorrichtung nach einem der Ansprüche 1 bis 8, dadurch gekennzeichnet, daß die Eintrittsflächen (20) und die Austrittsflächen (21) jeweils Ringflächen oder Vielecke sind.

10. Vorrichtung nach einem der Ansprüche 1 bis 9, dadurch gekennzeichnet, daß zumindest die innere(n) Austrittsfläche(n) (21) tiefer als die Eintrittsfläche(n) (20) und/oder die Mündung (7) der Zuführleitung (5) liegt.

11. Vorrichtung nach einem der Ansprüche 1 bis 10, dadurch gekennzeichnet, daß die Mündung (7) der Zuführleitung (5) und die Umlenkvorrichtung (9) zentral bzw. mittig in einem runden Silo (2) angeordnet sind.

12. Vorrichtung nach einem der vorstehenden Ansprüche,
dadurch gekennzeichnet, daß die Umlenkvorrichtung
(9) in ihrem Austrittsbereich durch radiale Wandungen (26) in Segmente (27, 28, 29) unterteilt ist,
deren einzelne Austrittsöffnungen (23, 24, 25) jeweils in Umfangsrichtung abwechselnd auf unterschiedlichen Außendurchmessern verteilt sind.

13. Vorrichtung nach Anspruch 12, dadurch gekennzeichnet, daß die Segmente mit unterschiedlichen Segmentwinkeln gebildet sind und die Segmente (27) für den
größten Austrittsumfang jeweils den größten Segmentwinkel haben.

14. Vorrichtung nach Anspruch 12 oder 13, dadurch gekennzeichnet, daß die Mündung der Zuführleitung auf
einer oberen Eintrittsebene (30) in die einzelnen
Segmente (27, 28, 29) liegt und oberhalb dieser
Mündung (7) und oberhalb der Eintritte (30) in die
Austrittssegmente (27, 28, 29) eine vorzugsweise gewölbte Prall- und Verteilfläche (31) vorgesehen ist,
die im Bereich der Mündung (7) der Zuführleitung (5)
die größte Höhe hat und im Randbereich der Umlenkvorrichtung (9) mit dieser verbunden ist.

15. Vorrichtung nach einem der Ansprüche 1, 2 oder 12
bis 14, dadurch gekennzeichnet, daß innerhalb der
einzelnen auf unterschiedlichen Durchmessern mündenden Segmente von innen nach außen schräg von oben
nach unten verlaufende Leitplatten (32) für den

21  0170080

größeren Abstand des Austrittes (23) von der Achse der Vorrichtung und schräg von außen nach innen verlaufende Leitbleche (33) für den Austritt (25) näher zu der Mitte der Vorrichtung jeweils zwischen den radialen Wandungen (26) vorgesehen sind.

16. Vorrichtung nach einem der Ansprüche 1, 2 oder 12 bis 15, dadurch gekennzeichnet, daß drei verschiedene Segmente (27, 28, 29) sich mehrfach, z. B. dreifach, vierfach oder gegebenenfalls sechsfach, am Umfang abwechseln.

Fig. 1

1/6

0170080

0170080

Fig. 2

0170080

Fig. 3

0170080

Fig.4

8
19
9
21
21
1
20
7
10
4
5
15

Fig.5

15
22
22
22

5|6

Fig. 7   0170080

9

26

27                23

5

29        25

26          28        24

28

27

29

Fig. 6

31

9

7        30

33            27        32

29              23

24      25      10

5

0170080

Fig. 8

Fig. 9

# EUROPÄISCHER RECHERCHENBERICHT

**0170080**
Nummer der Anmeldung

EP 85 10 8179

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | WO-A-8 102 565 (PETERSON)<br>* Figur; Beschreibung Seiten 1-3 * | 1 | B 65 G 69/04<br>B 65 G 65/32<br>B 65 D 88/54 |
| A | | 12 | |
| Y | --- <br> US-A-1 498 630 (JENSEN)<br>* Figur 3; Seite 1, Zeilen 61-79 * | 1 | |
| A | | 2-4,9, 11 | |
| | ----- | | |

### RECHERCHIERTE SACHGEBIETE (Int Cl 4)

B 65 G
B 65 D
A 01 C

Der vorliegende Recherchenbericht wurde für alle Patentansprüche erstellt

| Recherchenort | Abschlußdatum der Recherche | Prüfer |
|---|---|---|
| DEN HAAG | 25-10-1985 | WERNER D.M. |